# FASCICULE DE BREVET EUROPEEN

(11) **EP 3 803 928 B1**
(45) Date de publication et mention de la délivrance du brevet: **12.07.2023**
(21) Numéro de dépôt: 19726420.3
(22) Date de dépôt: 28.05.2019
(51) Int. Cl.: H01H 31/28, H01H 1/42, H02J 9/06, H01H 1/50, H01H 1/60

(54) **INVERSEUR DE SOURCE DE COURANT POUR CENTRALE NUCLÉAIRE**
STROMWECHSELRICHTER FÜR EIN KERNKRAFTWERK
CURRENT SOURCE INVERTER FOR NUCLEAR POWER FACILITY

(30) Priorité: 28.05.2018 FR 1800523
(43) Date de publication de la demande: 14.04.2021
(73) Titulaire: AMC, Agay 83530 SAINT RAPHAEL (FR)
(72) Inventeur: PILLET, Michel, 06400 CANNES (FR)
(74) Mandataire: Bonneau, Florence
(86) Numéro de dépôt international: PCT/EP2019/063845
(87) Numéro de publication internationale: WO 2019/229073

(56) Documents cités:
- EP-A1- 2 518 750
- EP-A1- 3 276 769
- WO-A1-2012/095156
- FR-A1- 2 997 788
- JP-A- S59 190 696

## Description

### Domaine technique de l'invention

La présente invention concerne le domaine technique des inverseurs de courant de haute intensité pour les dispositifs de secours en cas de perte de l'alimentation électrique et concerne en particulier un inverseur de source de courant pour centrale nucléaire.

### Etat de la technique

Des dispositifs de secours sont installés dans les centrales nucléaires afin de pallier toute perte d'alimentation électrique en cas de défaillance due à une situation critique engendrée par exemple par une catastrophe naturelle telle que séisme, inondation, tornade. Ces dispositifs comprennent une source de courant telle qu'un diesel d'ultime secours (DUS) en capacité de garantir le fonctionnement des systèmes de sûreté de la centrale et en particulier du système de refroidissement de l'installation.

Le dispositif de secours comprend également un dispositif qui permet de basculer l'alimentation électrique sur les DUS. Un tel dispositif est un inverseur de source qui doit également être sécurisé et résistant en cas de situations critiques.

De plus, l'inverseur de source doit être dimensionné pour des courants de haute intensité compris entre 1000 et 40000 Ampères.

Les dispositifs actuels qui assurent la permutation d'une source électrique à une autre dans les centrales nucléaires sont généralement composés de deux sectionneurs de courant en parallèle. Ces dispositifs sont prévus pour couper le courant et le rétablir en charge à des tensions de l'ordre de 6000V. Ces dispositifs ont l'inconvénient d'être très encombrants et nécessitent parfois la construction d'un bâtiment dédié pour les installer.

D'autre part, ces dispositifs comprennent des contacts électriques très sollicités à ces valeurs de courant et dont la résistance doit être la plus faible possible pour limiter les échauffements. Or, la présence de poussières sur les contacts augmente leur résistance et peut également provoquer des courts circuits.

On connaît du document EP 2 562 778, un dispositif de contact dont la géométrie des contacts permet d'obtenir un courant arrivant dans un premier contact, de même sens que le courant dans le second contact qui en repart. Il en résulte des forces d'attraction électrodynamiques qui maintiennent les deux contacts fermés en cas de court-circuit ou de surintensité. Ce dispositif a l'inconvénient d'être limité à un courant de l'ordre de 50 A à quelques centaines d'ampères et nécessite d'avoir des contacts toujours propres.

De même, le document WO2012/095156 décrit un dispositif pour commuter entre les différentes prises d'enroulement d'un transformateur à prise afin d'adapter le nombre de spires actives à la consommation du réseau. Il comprend trois contacts fixes et un pont de contacts mobiles pour connecter deux contacts fixes adjacents. Le but étant d'éviter que la pression de contact soit non uniforme le dispositif décrit comprend un moyen pour ajuster la force de contact entre les plaques en contact. Le dispositif est placé sur le circuit haute tension avec des intensités faibles de quelques dizaines d'ampères à quelques centaines d'ampères.

Le document FR 2 997 788 décrit un dispositif de déconnexion pour déconnecter une ligne d'alimentation électrique d'intensité supérieure à 1000 A.

En outre, le document EP2518750 décrit un sectionneur de mise à la terre évitant la production d'arc électrique pendant la fermeture du sectionneur grâce à un moyen pour passer rapidement dans la position de fermeture.

### Exposé de l'invention

C'est pourquoi, le but de l'invention est de réaliser un dispositif qui permette le basculement d'une source de courant principale à une source de courant de secours pour garantir le bon fonctionnement d'une centrale nucléaire, tout en étant peu encombrant et sécurisé pour résister en cas de situations critiques.

Un autre but de l'invention est de fournir un dispositif qui permette d'économiser de l'énergie pendant le basculement de la source de courant principale à la source de courant de secours.

L'objet de l'invention est donc un inverseur de source pour courant d'intensité comprise entre 1000 Ampères (A) et 40000 A comprenant une ou plusieurs phases, destiné à connecter une charge électrique à une source d'énergie électrique de secours en cas de défaillance de la source d'énergie électrique principale, l'inverseur de source comprenant par phase trois pôles relié chacun à au moins un élément de contact fixe, chaque pôle étant relié respectivement à la source d'énergie électrique principale, à la charge électrique à alimenter et à la source d'énergie électrique de secours. Selon la caractéristique principale, l'inverseur de source comprend par phase au moins un élément de contact mobile afin de connecter deux pôles d'une même phase ensemble par contact avec deux des trois éléments de contact fixes, l'élément de contact mobile étant adapté pour se déplacer entre deux positions, une première position dans laquelle l'élément de contact mobile connecte l'élément de contact fixe relié à la charge électrique à l'élément de contact fixe relié à la source d'énergie électrique principale et une seconde position dans laquelle l'élément de contact mobile connecte l'élément de contact fixe relié à la charge électrique à l'élément de contact fixe relié à la source d'énergie électrique de secours, l'élément mobile comprenant deux conducteurs plans parallèles et identiques, un conducteur plan supérieur et un conducteur plan inférieur, la circulation du courant s'effectuant dans le même sens dans les deux conducteurs lorsque l'inverseur de source est sous tension , il existe une force d'attraction électrodynamique des deux conducteurs plans l'un vers l'autre proportionnelle au carré de l'intensité du courant capable de maintenir le contact entre les éléments de contacts fixes et mobiles en cas de surintensité due à un court-circuit.

### Description brève des figures

Les buts, objets et caractéristiques de l'invention apparaîtront plus clairement à la lecture de la description qui suit faite en référence aux dessins dans lesquels :
La figure 1 représente une vue schématique d'une installation électrique comprenant un inverseur de source,
La figure 2 représente une vue d'ensemble du dispositif selon l'invention,
La figure 3a représente une vue de dessus d'un contact du dispositif selon une première position,
La figure 3b représente une vue de dessus d'un contact du dispositif selon une seconde position,
La figure 4 représente une vue en coupe d'un contact du dispositif selon l'invention,
La figure 5a représente une vue en coupe des contacts selon la seconde position des contacts mobiles,
La figure 5b représente une vue en coupe contacts selon la position intermédiaire des contacts mobiles,
La figure 5c représente une vue en coupe des contacts selon le passage des contacts mobiles de la position intermédiaire vers leur première position.

### Description détaillée de l'invention

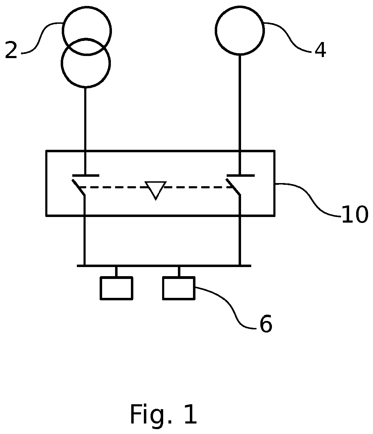

La figure 1 est une représentation schématique d'une installation électrique comportant un inverseur de sources 10. Une source principale 2 fournit l'énergie électrique à une ou plusieurs charges telles qu'un circuit de refroidissement 6 de centrale nucléaire. En cas d'indisponibilité de la source principale 2 suite à une défaillance, une source d'énergie électrique de secours 4 telle qu'un diesel d'ultime secours (DUS) est utilisée pour continuer à alimenter la charge telle que le circuit de refroidissement 6. L'inverseur de source 10 permet l'alimentation électrique d'une ou plusieurs charges telles qu'un circuit de refroidissement, par la source d'énergie électrique principale ou par la source d'énergie électrique de secours.

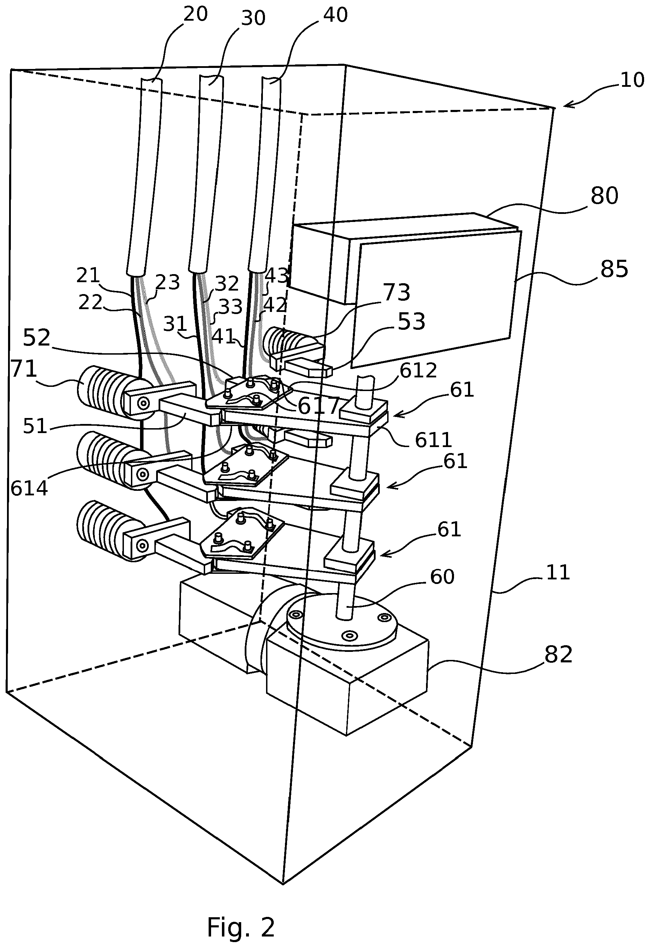

Selon la figure 2, le dispositif selon l'invention est un inverseur de source 10 placé à l'intérieur d'un châssis isolant 11. L'inverseur de source dispose de trois entrées / sorties représentées par les câbles 20, 30 et 40. La charge électrique telle que le circuit de refroidissement 6 est connectée à l'inverseur de source grâce au câble 30 tandis que la source d'énergie électrique principale est connectée à l'inverseur de source par le câble 20 et la source d'énergie électrique de secours par le câble 40.

Les sources d'énergie électriques principale et de secours délivrent une énergie électrique sous forme triphasée ou sous forme monophasée. Selon le mode de réalisation décrit, la distribution de l'énergie électrique est triphasée. Chaque câble 20, 30 et 40 comprend chacun trois fils conducteurs correspondant aux trois phases du courant et illustrés en noir, gris foncé et gris clair. Le câble 20 comprend les fils conducteurs 21, 22 et 23, le câble 30 comprend les fils conducteurs 31, 32 et 33 et le câble 40 comprend les fils conducteurs 41, 42 et 43. Le fil conducteur de mise à la terre n'est pas représenté sur la figure.

Les fils conducteurs d'une même phase sont reliés à trois pôles comprenant chacun au moins un élément de contact fixe. Par exemple, les fils conducteurs gris clair 23, 33 et 43 d'une même phase sont reliés aux éléments de contact fixe 51, 52 et 53. Donc par phase, le dispositif comprend au moins trois pôles alignés dans un même plan, le pôle relié à la charge électrique à alimenter étant situé au centre entre les deux autres pôles. Le dispositif selon l'invention comprend donc trois pôles par phase, chaque pôle d'une même phase étant relié chacun à au moins un élément de contact fixe situé sur un même plan. Selon le mode de réalisation préféré de l'invention, les trois pôles de chaque phase sont reliés chacun à un seul élément de contact fixe. Le dispositif selon l'invention comprend les mêmes caractéristiques par phase dont les détails de la description pour une phase sont valables pour les deux autres phases. Les éléments de contact fixes sont incorporés au châssis isolant 11 de l'inverseur de source.

L'inverseur de source comprend également au moins un élément de contact mobile par phase, donc trois éléments de contact mobiles 61, 62 et 63, solidaires d'un axe tournant 60. Les éléments de contact mobiles sont adaptés pour se déplacer entre deux positions dites positions de fermeture afin de connecter deux pôles d'une même phase ensemble par contact avec deux éléments de contact fixes situés côte à côte sur les trois d'une même phase.

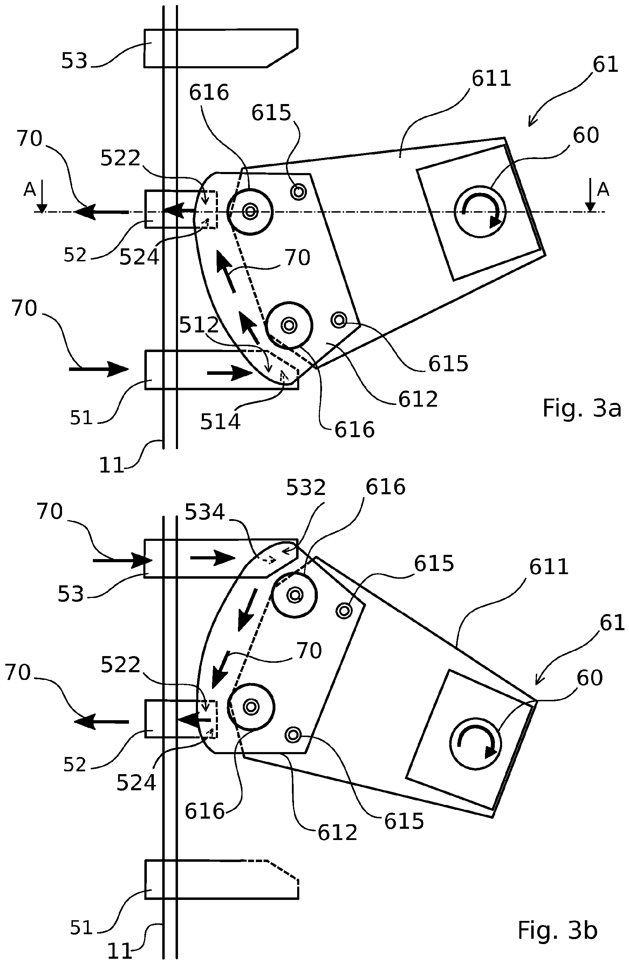

Comme on le verra plus loin dans la description, les figures 3a et 3b illustrent respectivement ces deux positions pour une même phase. Dans la première position, l'élément de contact mobile 61 est relié aux éléments de contact fixes 51 et 52, eux-mêmes étant reliés aux câbles 20 et 30 de façon à ce que la source d'énergie électrique principale 2 alimente la charge électrique 6. Dans la seconde position, l'élément de contact mobile 61 est relié aux éléments de contact fixes 52 et 53, eux-mêmes étant reliés aux câbles 30 et 40 de façon à ce que la source d'énergie électrique de secours 4 alimente la charge électrique 6. Le dispositif est configuré et dimensionné pour que les trois pôles d'une même phase ne puissent jamais être connectés en même temps.

Simultanément au cours du déplacement du premier élément de contact mobile, les deux autres éléments de contact mobiles se déplacent et connectent également les pôles d'une même phase de façon à alimenter la charge électrique soit par la source d'énergie électrique principale soit par la source d'énergie électrique de secours de façon identique au premier élément de contact mobile 61.

Chaque élément de contact fixe comprend deux plages de contact en matériau conducteur. Pendant la permutation, les éléments de contact mobiles sont connectés en permanence aux éléments de contact fixes du centre donc au pôle relié à la charge électrique et au plus à un des deux autres éléments de contact fixes. Ainsi, l'élément de contact mobile 61 est connecté en permanence à l'élément de contact fixe 52 par ses deux plages de contact.

L'élément de contact mobile 61 comprend une partie centrale isolante 611 reliée à l'axe 60 et sur laquelle sont fixés deux conducteurs plans 612 et 614 parallèles entre eux et de façon à être face à face. Les deux conducteurs plans sont de préférence en cuivre. Le conducteur plan 612 est le conducteur supérieur et le conducteur plan 614 est le conducteur inférieur.

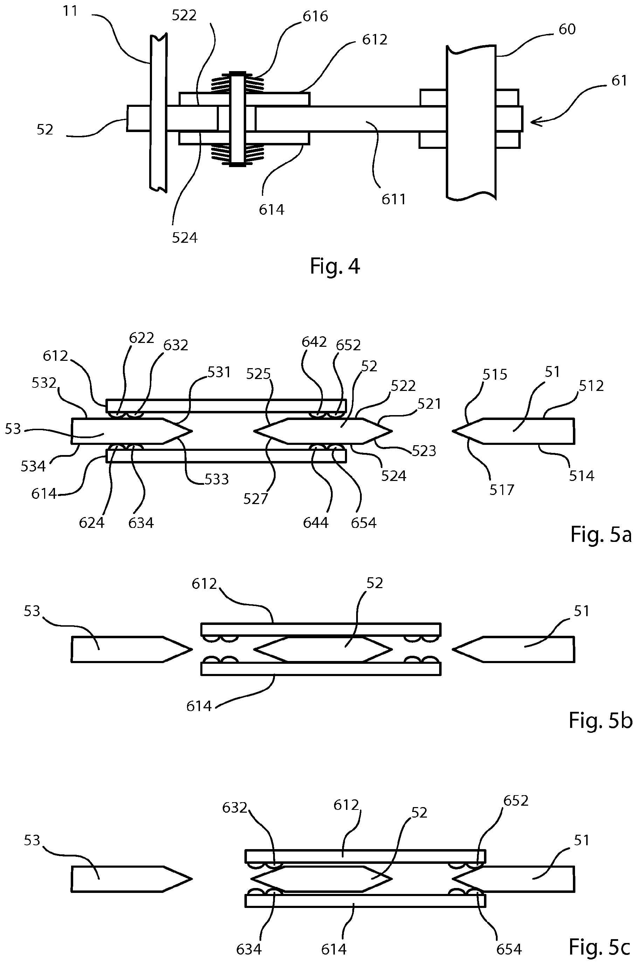

Selon un autre mode de réalisation, chaque partie des surfaces des conducteurs plans 612, 614 destinées à assurer le contact électrique comportent au moins une pastille d'argent pur afin de réduire de moitié la résistance de contact. Ce mode de réalisation est illustré en référence aux figures 5a, 5b et 5c. Les éléments de contact fixe peuvent également comporter des pastilles d'argent et ces pastilles d'argent peut être remplacé par un revêtement en argent de faible épaisseur.

L'inverseur de source 10 comprend également un module de contrôle 80 qui pilote les opérations de permutation d'une source à l'autre. Il comprend des moyens de détection de l'absence de tension des sources d'énergie électrique. Le module de contrôle permet de mettre en route automatiquement un moteur 82 qui entraîne l'axe 60 en rotation dans un sens ou dans un autre afin de déplacer les éléments de contact mobiles d'une position à l'autre. Le module de contrôle comprend des moyens de mesure des tensions dans les deux pôles connectés aux fils conducteurs des câbles 20 et 40 reliés aux sources d'énergie électrique. Ainsi, le module de contrôle est connecté aux sources 2 et 4 via une liaison passant par un diviseur de tension capacitif. De cette façon, les moyens de mesure sont couplés à un diviseur de tension 71 et 73 respectivement sur les pôles reliés aux éléments de contact fixes 51 et 53 afin de rendre utilisable le signal reçu. Le moteur est mis en route seulement si aucune tension n'est mesurée aux bornes des diviseurs de tension 71 et 73 donc entre les pôles.

L'inverseur de source comprend également des moyens pour déplacer les éléments de contact mobiles de façon manuelle. Ces moyens ne sont activables que si aucune tension n'est mesurée aux bornes des diviseurs de tension 71 et 73 donc entre les pôles. Ainsi, le module de contrôle comprend des moyens de sécurité pour empêcher l'entraînement en rotation de l'axe tournant 60 lorsque deux pôles sont sous tension, ce qui empêche le déplacement des éléments de contact mobiles. Ceci afin de sécuriser les opérateurs. Le module de contrôle 80 permet l'entraînement en rotation de l'axe tournant 60 soit de façon automatique grâce à des moyens motorisés 82, soit de façon manuelle.

L'inverseur de source comprend une interface 85 reliée au module de contrôle 80. L'interface 85 comprend un indicateur lumineux tel qu'au moins une led dont la fonction est d'indiquer si la charge 6 est branchée à la source d'énergie électrique principale 2 ou à la charge électrique de secours 4. De plus, l'interface 85 comprend également un indicateur de position de l'inverseur de source qui indique la position des éléments de contact mobiles. Cet indicateur est mécanique car relié à l'axe tournant 60 sur lequel sont fixés les éléments de contact mobiles. L'indicateur de position indique la position des éléments de contact mobiles donc s'ils sont connectés aux pôles reliés à la source d'énergie électrique principale 2 ou bien à la source d'énergie électrique de secours 4, donc indique, comme pour l'indicateur lumineux, par quelle source est alimentée la charge. L'indicateur de position est un indicateur de sécurité car il fonctionne même en cas de panne de l'indicateur lumineux.

Les figures 3a, 3b et 4 illustrent en détail les éléments de contact fixe et mobile selon une vue de dessus et une vue en coupe selon l'axe AA de la vue de dessus illustrée en figure 3a.

Chaque élément de contact fixe comprend deux plages de contact en matériau conducteur, une première plage de contact située sur la face supérieure de l'élément de contact fixe et une seconde plage de contact située sur la face inférieure de l'élément de contact fixe et opposée à la face supérieure de façon à ce que toutes les premières plages de contact des trois éléments de contact fixes d'une même phase soient orientées dans une même direction et que toutes les secondes plages de contact de tous les éléments de contact fixes soient orientées également dans une même direction. De plus, les premières plages de contact sont parallèles aux secondes plages de contact.

Les premières plages de contact des éléments de contact fixes 51, 52 et 53 sont référencées respectivement 512, 522 et 532 et les secondes plages de contact des éléments de contact fixes 51, 52 et 53 sont référencées respectivement 514, 524 et 534. Les éléments de contact fixe 51, 52 et 53 sont alignés et comprennent chacun deux plages de contact en matériau conducteur, une première plage de contact 512, 522 et 532 et une seconde plage de contact 514, 524 et 534, de sorte que les premières plages de contact sont situées dans un premier et même plan et que les secondes plages de contact sont situées dans un second et même plan parallèle au premier plan.

Les première et seconde plages de contact de tous les éléments de contact fixe sont écartées d'une distance identique et égale à la distance d'écartement des deux conducteurs plans 612 et 614. Ainsi, l'élément de contact fixe 52 est enserré entre les deux conducteurs 612 et 614 qui forment une pince autour de l'élément fixe. De cette façon, le contact électrique entre l'élément de contact mobile 61 et un élément de contact fixe se fait toujours à travers deux paires de surfaces en contact deux à deux, une première paire comprenant la première plage de contact 512, 522 et 532 de l'élément de contact fixe 51, 52 et 53 et la surface de contact du conducteur plan supérieur 612 et une seconde paire comprenant la seconde plage de contact 512, 522 et 532 de l'élément de contact fixe 51, 52 et 53 et la surface de contact du conducteur plan inférieur 614.

Par exemple, selon la première position de l'élément de contact mobile illustrée sur la figure 3a, le conducteur plan supérieur 612 est en contact avec la plage de contact supérieure 522 de l'élément de contact fixe 52 tandis que le conducteur plan inférieur 614, non visible sur la figure car située en dessous de conducteur plan supérieur 612, est en contact avec la plage de contact inférieure 524 de l'élément de contact fixe 52.

Les deux conducteurs plans de l'élément de contact mobile sont fixés à la partie centrale isolante 611 grâce à des vis 615. Une force élastique permanente supplémentaire tend à rapprocher les deux conducteurs plans 612 et 614 l'un vers l'autre. Lorsqu'ils sont placés autour d'un élément fixe, cette force élastique induit une pression de contact des conducteurs plans sur les éléments de contact fixes. Cette pression de contact est appelée également effort de serrage.

La force élastique des deux conducteurs plans 612 et 614 est obtenue grâce à des moyens de type ressort à lames 617 tels qu'illustrés sur la figure 2 ou ressort 616 tels qu'illustrés sur les figures 3a, 3b et 4. Ainsi, l'élément de contact mobile 61 comprend un moyen de type ressort 616, 617 qui exerce une force élastique qui tend à rapprocher les deux conducteurs plans 612 et 614 l'un vers l'autre, de façon que lorsqu'ils sont en contact avec un ou deux éléments de contact fixes, cette force élastique induit une pression de contact ou effort de serrage des conducteurs plans sur les éléments de contact fixes.

L'élément de contact mobile se déplace d'une position à l'autre lorsqu'il n'existe aucune tension électrique entre les pôles. Lorsqu'il se déplace, l'élément de contact mobile est constamment en contact avec au moins l'élément de contact fixe 52 situé entre les deux autres éléments de contact fixes. En particulier, les conducteurs plans inférieur 614 et supérieur 612 de l'élément de contact mobile 61, sont toujours en contact avec au moins l'élément de contact fixe 52 situé entre les deux autres éléments de contact fixes.

Ainsi, l'élément de contact fixe 52 situé au centre sert d'élément de guidage à l'élément de contact mobile. En effet, lorsque l'élément de contact mobile passe de sa première position illustrée sur la figure 3a à la seconde position illustrée sur la figure 3b, les conducteurs inférieur et supérieur sont en contact permanent avec l'élément de contact fixe 52. Dans la position intermédiaire entre les première et seconde positions, les conducteurs plans inférieur 614 et supérieur 612 sont en contact avec l'élément de contact fixe 52. Dans chacune de ces positions, l'élément de contact mobile est connecté à deux éléments de contacts fixes afin de relier deux pôles ensemble. Ce qui permet de maintenir les pièces en contact même en cas de perturbations sismiques. Cette disposition présente l'avantage de garantir le fonctionnement de l'inverseur de source en toutes circonstances et de pallier aux risques sismiques.

Grâce à l'effort de serrage résultant de la force élastique agissant en permanence sur les conducteurs plans, les conducteurs plans inférieur et supérieur frottent contre les plages de contact de l'élément fixe ce qui débarrasse toutes les surfaces en contact des salissures, de l'oxydation éventuelle et des poussières conductrices qui peuvent se poser sur les plages de contact et dégrader leur état de surface. Ainsi, la résistance de contact n'augmente pas avec le temps. Les déplacements des éléments de contact mobiles assurent l'auto nettoyage des plages de contact 512, 514, 522, 524, 532 et 534 des éléments de contact fixe 51, 52 et 53 et des plages de contacts des conducteurs plans supérieur 612 et inférieur 614.

L'effort de serrage permet le frottement des conducteurs plans contre les éléments de contact fixes ce qui permet l'auto nettoyage des plages de contact lorsque l'élément de contact mobile se déplace d'une position à l'autre. L'effort de serrage exercé par les ressorts 616 ou 617 sur les conducteurs plans inférieur 614 et supérieur 612 peut être diminuée ou augmentée grâce à un moyen de serrage des ressorts 616 ou 617 afin de régler l'effort de serrage pour obtenir un frottement des plages de contact les unes contre les autres efficace et un effort de serrage important pour obtenir une surface de contact suffisante lors de la mise sous tension.

La distance entre les éléments de contact fixes adjacents correspond à une distance dans l'air afin de garantir un isolement électrique d'au moins 20 kV. La distance entre deux contacts fixes adjacents est au moins égale à 5 cm et de préférence égale à 10 cm.

Lorsque l'inverseur est sous tension et connecté à la source d'énergie électrique principale, l'élément de contact mobile 61 dans sa première position illustrée sur la figure 3a, connecte électriquement l'élément de contact fixe 51 à l'élément de contact fixe 52 par liaison électrique à travers les conducteurs plans supérieur et inférieur 612 et 614 de l'élément de contact mobile. Le courant symbolisé par les flèches 70 arrive dans l'élément de contact fixe 51 jusqu'aux plages de contact 512 et 514, traverse les contacts entre le conducteur plan supérieur 612 et l'élément de contact fixe 52 d'une part et le conducteur inférieur plan 614 (non représenté sur la figure 2) et l'élément de contact fixe 52 d'autre part, circule dans les deux conducteurs plans supérieur 612 et inférieur 614 et repart par le contact 52 par les deux plages de contact 522 et 524.

De même, dans sa deuxième position illustrée sur la figure 3b, le courant en provenance de la source d'énergie électrique de secours arrive dans l'élément de contact fixe 53 jusqu'aux plages de contact 532 et 534, traverse les contacts entre le conducteur plan supérieur 612 et l'élément de contact fixe 53 d'une part et le conducteur inférieur plan 614 (non représenté sur la figure 2) et l'élément de contact fixe 52 d'autre part, circule dans les deux conducteurs plan supérieur 612 et inférieur 614 et repart par le contact 52 par les deux plages de contact 522 et 524.

Dans les deux positions le sens de circulation du courant est le même dans les deux conducteurs plans supérieur 612 et inférieur 614. Cela fait naitre des forces électrodynamiques entre les deux conducteurs plans qui ont tendance à attirer les conducteurs plans l'un vers l'autre. La force d'attraction d'un conducteur sur l'autre est proportionnelle au carré de l'intensité du courant qui traverse les conducteurs parallèles. L'effet d'attraction électrodynamique dû à la circulation du courant s'effectuant dans le même sens dans les deux conducteurs plans tend à serrer les deux conducteurs plans inférieur 614 et supérieur 612 de l'élément de contact mobile 61 contre les deux éléments de contact fixes avec lesquels ils sont en contact.

Selon le mode de réalisation illustré sur les figures 5a, 5b et 5c, les contacts fixes et mobiles sont schématisés et vus de face. Les contacts fixes 51, 52 et 53 ont tous la même épaisseur. Chaque conducteur plan 612 et 614 comprend au moins une pastille d'argent à chaque extrémité en contact avec les plages de contacts des contacts fixes lorsque les contacts mobiles sont dans leur première ou seconde position. Les pastilles d'argent sont toutes identiques et leur épaisseur est comprise entre 1 mm et 10 mm et est de préférence comprise entre 1 mm et 5 mm. Selon la figure 5a, les contacts mobiles sont dans leur seconde position et le conducteur plan supérieur 612 comporte au moins une pastille d'argent 622 et de préférence comporte une seconde pastille d'argent 632 en contact avec la surface de contact supérieure 532 du contact fixe 53 et au moins une pastille d'argent 652 et de préférence une seconde pastille d'argent 642 en contact avec la surface de contact supérieure 522 du contact fixe 52. De même, le conducteur plan inférieur 614 comporte au moins une pastille d'argent 624 et de préférence une seconde pastille d'argent 634 en contact avec la surface de contact inférieure 534 du contact fixe 53 et au moins une pastille d'argent 654 et de préférence une seconde pastille d'argent 644 en contact avec la surface de contact inférieure 524 du contact fixe 52. Les pastilles d'argent sont assemblées sur les contacts par brasage à haute température de l'ordre de 600 °C et plus.

Lorsque les contacts mobiles sont dans leur première ou seconde position et hors tension, si la force exercée par les ressorts 616 et 617 (non représentés sur les figures 5a à 5c) est de l'ordre de 1000 N, la section de passage du courant obtenue entre les éléments de contact fixes et les conducteurs plans à travers les pastilles d'argent est comprise entre 800 et 1200 mm2 (millimètres au carré) et la résistance de contact est de l'ordre de quelques millièmes de Ohms. Chaque pastille d'argent ayant une surface en contact avec le contact fixe comprise entre 200 et 300 mm2. Lorsque l'inverseur de source est mis sous tension, la montée du courant est progressive et pendant cette montée de courant, la force d'attraction des deux conducteurs plans l'un vers l'autre est faible. Ainsi, pendant la montée du courant, la force de pression sur les contacts est assurée par les ressorts afin que la résistance de contact soit la plus faible possible et afin de dégrader le moins possible les surfaces en contact. Lorsque l'intensité du courant atteint sa valeur nominale comprise entre 1000 A et 4000 A, la force d'attraction des conducteurs s'ajoute à la force des ressorts.

Les forces cumulées exercées améliorent la surface des contacts et ainsi diminue les pertes. De plus, en cas de surintensité dû à un court-circuit, les contacts sont maintenus et le dispositif protégé car la force d'attraction est supérieure à la force de répulsion induite par le court-circuit. Sachant que les courants de court-circuit dans les installations des circuits de refroidissement des centrales nucléaires peuvent atteindre 40000 Ampères, la force d'attraction des conducteurs plans peut atteindre 10000N.

Les contacts fixes 51, 52 et 53 comportent des surfaces de contacts obliques sur leurs bords d'attaque. Ainsi, le contact fixe 52 situé entre les contacts 51 et 53 comporte deux surfaces de contact obliques supérieures 525 et 521, et deux surfaces de contact obliques inférieures 527 et 523. Le contact fixe 53 comporte une surface de contact oblique supérieure 531 et une surface de contact oblique inférieure 533 tandis que le contact fixe 51 comporte une surface de contact oblique supérieure 515 et une surface de contact oblique inférieure 517.

Lors du déplacement des contacts mobiles d'une position à l'autre, les conducteurs plans inférieurs et supérieurs se resserrent car les pastilles d'argent ne sont plus en contact avec les éléments de contact fixes. En effet, la pression exercée par les ressorts diminue lorsque les contacts mobiles commencent leur déplacement car les pastilles d'argent sortent des surfaces de contact inférieures et supérieurs des éléments de contact fixes et abordent les pentes des surfaces de contact obliques. L'effort de serrage de contact dû aux ressorts diminue progressivement au fur et à mesure du mouvement et est minimum lorsque les pastilles d'argent ne sont plus en contact avec les éléments de contact fixes comme illustré sur la figure 5b où les contacts mobiles sont dans leur position intermédiaire et où la partie des conducteurs plans non munie des pastilles d'argent frottent contre l'élément de contact fixe 52.

Lorsque les contacts mobiles 61 se déplacent vers leur première position, les pastilles d'argent entrent en contact avec les bords d'attaque des éléments de contact fixes 51 et 52. Ainsi le contact avec l'élément de contact fixe 51 se fait avec les pastilles d'argent 652 et 654 qui entrent en contact avec respectivement les surfaces de contact obliques 515 et 517 tandis que simultanément les pastilles d'argent 642 et 644 entrent en contact avec les surfaces de contact obliques 525 et 527 de l'élément de contact fixe 52.

Les conducteurs plans 612 et 614 s'écartent l'un de l'autre au fur et à mesure du mouvement et que les pastilles d'argent gravissent les pentes des surfaces de contact obliques. Ainsi, au fur et à mesure que les éléments de contact mobiles se déplacent vers leur première position, l'effort de serrage de contact des éléments de contact mobiles 61 contre les éléments de contact fixes 51 et 52, dû aux ressorts, augmentent progressivement jusqu'à atteindre son maximum lorsque les contacts mobiles atteignent leur première position. De plus, le frottement des pastilles d'argent contre les éléments de contact fixes 51, 52 et 53 permet l'auto nettoyage des plages de contact lorsque l'élément de contact mobile se déplace d'une position à l'autre et contribue donc à diminuer la résistance de contact en éliminant les dépôts de corrosion ou de poussières des surfaces en contact.

En règle générale, au fur et à mesure que les éléments de contact mobiles se déplacent de leur position intermédiaire vers une des deux positions de fermeture, l'effort de serrage de contact des éléments de contact mobiles contre les éléments de contact fixes, dû aux ressorts, augmentent progressivement de sa valeur minimum à sa valeur maximum et inversement, au fur et à mesure que les éléments de contact mobiles se déplacent de leur position de fermeture vers leur position intermédiaire, l'effort de serrage diminue progressivement de sa valeur maximum à sa valeur minimum. Dans la position intermédiaire, les pastilles d'argent n'étant pas en contact avec l'élément de contact fixe 52, la distance entre les conducteurs plans 612 et 614 est minimum et égale à l'épaisseur d'un élément de contact fixe et dans la première ou seconde position les pastilles d'argent étant en contact avec les éléments de contact fixes (51, 52) ou (53, 52) la distance entre les conducteurs plans 612 et 614 est égale à la somme de l'épaisseur d'un élément de contact fixe et de deux fois l'épaisseur d'une pastille d'argent.

Ainsi pendant la rotation de l'axe tournant, l'effort de rotation est maximum et important sur quelques degrés de rotation (entre 4 et 10 degrés) en début et fin de mouvement de sorte que le dispositif économise de l'énergie ce qui représente un avantage non négligeable.

Le châssis 11 de l'inverseur de source est de préférence en résine thermodurcissable de type époxy ou polyester chargé en fibre de verre afin d'augmenter sa résistance mécanique sans dégrader sa capacité diélectrique.

L'encombrement maximal de l'inverseur de source et en particulier du châssis 11, de 130cm de hauteur sur 60 cm de largeur et 80 cm d'épaisseur facilite son passage à travers toutes les ouvertures même les portes de dimension standard.

## Revendications

1. Inverseur de source (10) de courant d'intensité comprise entre 1000 A et 40000 A comprenant une ou plusieurs phases, destiné à connecter une charge électrique (6) à une source d'énergie électrique de secours (4) en cas de défaillance de la source d'énergie électrique principale (2), ledit inverseur de source comprenant par phase trois pôles reliés chacun à au moins un élément de contact fixe (51, 52, 53), chaque pôle étant relié respectivement à la source d'énergie électrique principale (2), à la charge électrique à alimenter (6) et à la source d'énergie électrique de secours (4), ledit inverseur comprenant par phase au moins un élément de contact mobile (61) afin de connecter ensemble deux pôles d'une même phase par contact avec deux des trois éléments de contact fixes, ledit élément de contact mobile (61) étant adapté pour se déplacer entre deux positions,
**caractérisé en ce que** les deux positions comprennent une première position dans laquelle ledit élément de contact mobile (61) connecte ledit élément de contact fixe (52) relié à la charge électrique (6) audit élément de contact fixe (51) relié à ladite source d'énergie électrique principale (2), et une seconde position dans laquelle ledit élément de contact mobile (61) connecte ledit élément de contact fixe (52) relié à la charge électrique (6) audit élément de contact fixe (53) relié à ladite source d'énergie électrique de secours (4), ledit élément mobile (61) comprenant deux conducteurs plans parallèles et identiques, un conducteur plan supérieur (612) et un conducteur plan inférieur (614), la circulation du courant s'effectuant dans le même sens dans les deux conducteurs lorsque l'inverseur de source est sous tension, il existe une force d'attraction électrodynamique des deux conducteurs plans l'un vers l'autre proportionnelle au carré de l'intensité du courant capable de maintenir le contact entre les éléments de contacts fixes et mobiles en cas de surintensité due à un court-circuit, ledit élément de contact mobile (61) comprend un moyen de type ressort (616, 617) qui exerce une force élastique, de façon que lorsqu'ils sont en contact avec un ou deux éléments de contact fixes (51, 52, 53), cette force élastique induit un effort de serrage des conducteurs plans sur les éléments de contact fixes, qui augmente progressivement au fur et à mesure que les éléments de contact mobiles (61) se déplacent de leur position de fermeture vers leur position intermédiaire, et inversement diminue progressivement au fur et à mesure que les éléments de contact mobiles se déplacent de leur position intermédiaire vers leur position de fermeture.

2. Inverseur de source selon la revendication 1, dans lequel lesdits éléments de contact fixe (51, 52, 53) sont alignés et comprennent chacun deux plages de contact en matériau conducteur, une première plage de contact (512, 522, 532) et une seconde plage de contact (514, 524, 534), de sorte que les premières plages de contact sont situées dans un premier et même plan et que les secondes plages de contact sont situées dans un second et même plan parallèle audit premier plan.

3. Inverseur de source selon la revendication 2, dans lequel la connexion électrique entre ledit élément de contact mobile et un élément de contact fixe (51, 52, 53) se fait à travers deux paires de surfaces en contact, une première paire comprenant la première plage de contact (512, 522, 532) de l'élément de contact fixe (51, 52, 53) et la surface de contact du conducteur plan supérieur (612) et une seconde paire comprenant la seconde plage de contact (512, 522, 532) de l'élément de contact fixe (51, 52, 53) et la surface de contact du conducteur plan inférieur (614).

4. Inverseur de source selon la revendication 2 ou 3, dans lequel, dans chacune de ses positions, l'élément de contact mobile est connecté à deux éléments de contacts fixes afin de relier deux pôles ensemble.

5. Inverseur de source selon l'une des revendication 2 à 4, dans lequel chaque élément de contact mobile (61) comprend une partie centrale isolante (611) sur laquelle sont fixés les deux conducteurs plans supérieur (612) et inférieur (614) de façon à être parallèle et face à face.

6. Inverseur de source selon l'une des revendications 1 à 5, dans lequel l'effort de serrage permet le frottement des conducteurs plans contre les éléments de contact fixes ce qui permet l'auto nettoyage des plages de contact lorsque l'élément de contact mobile se déplace d'une position à l'autre.

7. Inverseur de source selon l'une des revendication 1 à 6, dans lequel chaque partie des surfaces des conducteurs plans (612, 614) destinées à assurer le contact électrique comportent au moins une pastille d'argent (622, 652, 624, 654) et comportent de préférence une seconde pastille d'argent (632, 642, 634, 644) .

8. Inverseur de source selon la revendication 7 dans lequel l'effort de serrage dû aux ressorts est minimum lorsque l'élément de contact mobile (61) est dans une position intermédiaire située entre la première et la seconde position et dans lequel l'effort de serrage dû aux ressorts est maximum lorsque l'élément de contact mobile (61) est dans sa première ou seconde position, dans la position intermédiaire les pastilles d'argent n'étant pas en contact avec l'élément de contact fixe 52, la distance entre les conducteurs plans (612, 614) est minimum et égale à l'épaisseur d'un élément de contact fixe et dans la première ou seconde position les pastilles d'argent étant en contact avec les éléments de contact fixes (51, 52) ou (53, 52) la distance entre les conducteurs plans (612, 614) est égale à la somme de l'épaisseur d'un élément de contact fixe et de deux fois l'épaisseur d'une pastille d'argent.

9. Inverseur de source selon l'une des revendications 1 à 8, dans lequel les contacts fixes (51, 52, 53) comportent des surfaces de contacts obliques sur leurs bords d'attaque, le contact fixe (52) situé entre les contacts (51) et (53) comporte deux surfaces de contact obliques supérieures (525, 521) et deux surfaces de contact obliques inférieures (527, 523), le contact fixe (53) comporte une surface de contact oblique supérieure (531) et une surface de contact oblique inférieure (533) tandis que le contact fixe (51) comporte une surface de contact oblique supérieure (515) et une surface de contact oblique inférieure (517).

10. Inverseur de source selon l'une des revendications 1 9, dans lequel lesdits conducteurs plans inférieur (614) et supérieur (612) de l'élément de contact mobile (61), sont toujours en contact avec l'élément de contact fixe (52) situé entre les deux autres éléments de contact fixes, l'élément de contact fixe (52) servant de moyen de guidage de l'élément de contact mobile (61) pendant qu'il se déplace d'une position à l'autre.

11. Inverseur de source selon l'une des revendications 1 à 10, dans lequel la distance entre deux éléments de contacts fixe adjacent est égale à 5 cm.

12. Inverseur de source selon l'une des revendications 1 à 11, comprenant un module de contrôle (80) qui permet l'entraînement en rotation d'un axe tournant (60) sur lequel est reliée la partie centrale isolante (611) de chaque élément de contact mobile (61), l'entrainement dudit axe tournant étant effectué soit de façon automatique grâce à des moyens motorisés (82), soit de façon manuelle.

13. Inverseur de source selon la revendication 12, dans lequel le module de contrôle comprend des moyens de mesure des tensions dans les deux pôles connectés aux fils conducteurs des câbles (20) et (40) reliés aux sources d'énergie électrique (2) et (4), les moyens de mesure étant couplés chacun à un diviseur de tension (71 et 73) respectivement sur les pôles reliés aux éléments de contact fixes (51) et (53).

14. Inverseur de source selon la revendication 12 ou 13, dans lequel ledit module de contrôle comprend des moyens de sécurité pour empêcher l'entraînement en rotation dudit axe tournant (60) si une tension est mesurée aux bornes des diviseurs de tension (71) et (73).

15. Inverseur de source selon l'une des revendications 1 à 14, comprenant une interface (85) avec un indicateur lumineux dont la fonction est d'indiquer si la charge (6) est branchée à la source d'énergie électrique principale (2) ou à la source d'énergie électrique de secours (4).

16. Inverseur de source selon la revendication 15, dans lequel l'interface (85) comprend un indicateur relié mécaniquement à l'axe tournant (60) dont la fonction est d'indiquer si la charge (6) est branchée à la source d'énergie électrique principale (2) ou à la source d'énergie électrique de secours (4).

17. Inverseur de source selon l'une des revendications 1 à 16, placé à l'intérieur d'un châssis isolant (11) présentant un encombrement maximal de 130cm de hauteur sur 60 cm de largeur et 80 cm d'épaisseur.

## Patentansprüche

1. Quellenumschalter (10) für Strom mit einer Stärke zwischen 1000 A und 40000 A mit einer oder mehreren Phasen, der dazu bestimmt ist, eine elektrische Last (6) im Fall des Ausfalls der Hauptquelle elektrischer Energie (2) an eine Ersatzquelle elektrischer Energie (4) zu schalten, wobei der Quellenumschalter je Phase drei Pole umfasst, von denen jeder mit mindestens einem feststehenden Kontaktelement (51, 52, 53) verbunden ist, wobei jeder Pol mit der Hauptquelle elektrischer Energie (2), mit der zu versorgenden elektrischen Last (6) beziehungsweise mit der Ersatzquelle elektrischer Energie (4) verbunden ist, wobei der Umschalter je Phase mindestens ein bewegliches Kontaktelement (61) umfasst, um zwei Pole einer selben Phase je Kontakt mit zwei der drei feststehenden Kontaktelemente zusammenzuschalten, wobei das bewegliche Kontaktelement (61) geeignet ist, sich zwischen zwei Stellungen zu bewegen,
**dadurch gekennzeichnet, dass** die beiden Stellungen eine erste Stellung umfassen, in der das bewegliche Kontaktelement (61) das mit der elektrischen Last (6) verbundene feststehende Kontaktelement (52) an das mit der Hauptquelle elektrischer Energie (2) verbundene feststehende Kontaktelement (51) schaltet, und eine zweite Stellung, in der das bewegliche Kontaktelement (61) das mit der elektrischen Last (6) verbundene feststehende Kontaktelement (52) an das mit der Ersatzquelle elektrischer Energie (4) verbundene feststehende Kontaktelement (53) schaltet, wobei das bewegliche Element (61) zwei parallele und identische ebene Leiter, einen oberen ebenen Leiter (612) und einen unteren ebenen Leiter (614), umfasst, wobei der Stromfluss in den beiden Leitern in die gleiche Richtung erfolgt, wenn der Quellenumschalter unter Spannung steht, es eine elektrodynamische Anziehungskraft der beiden ebenen Leiter zueinander, die proportional zum Quadrat der Stärke des Stroms ist, gibt, die in der Lage ist, den Kontakt zwischen den feststehenden und beweglichen Kontaktelementen im Fall eines durch einen Kurzschluss bedingten Überstroms aufrechtzuerhalten, das bewegliche Kontaktelement (61) ein Mittel vom Typ Feder (616, 617) umfasst, das eine elastische Kraft ausübt, so dass, wenn sie in Kontakt mit einem oder zwei feststehenden Kontaktelementen (51, 52, 53) sind, diese elastische Kraft eine Spannkraft der ebenen Leiter an den feststehenden Kontaktelementen induziert, die im Zuge der Bewegung der beweglichen Kontaktelemente (61) aus ihrer Schließstellung in ihre Zwischenstellung progressiv steigt und umgekehrt im Zuge der Bewegung der beweglichen Kontaktelemente aus ihrer Zwischenstellung in ihre Schließstellung progressiv abnimmt.

2. Quellenumschalter nach Anspruch 1, bei dem die feststehenden Kontaktelemente (51, 52, 53) aneinandergereiht sind und jeweils zwei Kontaktbereiche aus leitendem Material, einen ersten Kontaktbereich (512, 522, 532) und einen zweiten Kontaktbereich (514, 524, 534), umfassen, so dass die ersten Kontaktbereiche in einer ersten und selben Ebene liegen und die zweiten Kontaktbereiche in einer zweiten und selben Ebene liegen, die parallel zu der ersten Ebene ist.

3. Quellenumschalter nach Anspruch 2, bei dem das elektrische Schalten zwischen dem beweglichen Kontaktelement und einem feststehenden Kontaktelement (51, 52, 53) über zwei in Kontakt stehende Flächenpaare erfolgt, wobei ein erstes Paar den ersten Kontaktbereich (512, 522, 532) des feststehenden Kontaktelements (51, 52, 53) und die Kontaktfläche des oberen ebenen Leiters (612) umfasst und wobei ein zweites Paar den zweiten Kontaktbereich (512, 522, 532) des feststehenden Kontaktelements (51, 52, 53) und die Kontaktfläche des unteren ebenen Leiters (614) umfasst.

4. Quellenumschalter nach Anspruch 2 oder 3, bei dem, in jeder seiner Stellungen, das bewegliche Kontaktelement an zwei feststehenden Kontaktelemente geschaltet ist, um zwei Pole miteinander zu verbinden.

5. Quellenumschalter nach einem der Ansprüche 2 bis 4, bei dem jedes bewegliche Kontaktelement (61) einen isolierenden zentralen Teil (611) umfasst, an dem die beiden oberen (614) und unteren (612) ebenen Leiter so befestigt sind, das sie parallel und einander gegenüber sind.

6. Quellenumschalter nach einem der Ansprüche 1 bis 5, bei dem die Spannkraft das Reiben der ebenen Leiter gegen die feststehenden Kontaktelemente ermöglicht, was die Selbstreinigung der Kontaktbereiche ermöglicht, wenn sich das bewegliche Kontaktelement aus einer Stellung in die andere bewegt.

7. Quellenumschalter nach einem der Ansprüche 1 bis 6, bei dem jeder Teil der Flächen der ebenen Leiter (612, 614), die dazu bestimmt sind, den elektrischen Kontakt zu gewährleisten, mindestens ein Silberplättchen (622, 652, 624, 654) beinhaltet und bevorzugt ein zweites Silberplättchen (632, 642, 634, 644) beinhaltet.

8. Quellenumschalter nach Anspruch 7, bei dem die durch die Federn bedingte Spannkraft minimal ist, wenn das bewegliche Kontaktelement (61) in einer Zwischenstellung ist, die zwischen der ersten und der zweiten Stellung liegt, und bei dem die durch die Federn bedingte Spannkraft maximal ist, wenn das bewegliche Kontaktelement (61) in seiner ersten oder zweiten Stellung ist, wobei in der Zwischenstellung, wenn die Silberplättchen nicht in Kontakt mit dem feststehenden Kontaktelement 52 sind, der Abstand zwischen den ebenen Leitern (612, 614) minimal ist und gleich der Dicke eines feststehenden Kontaktelements ist und in der ersten oder zweiten Stellung, wenn die Silberplättchen in Kontakt mit den feststehenden Kontaktelementen (51, 52) oder (53, 52) sind, der Abstand zwischen den ebenen Leitern (612, 614) gleich der Summe aus der Dicke eines feststehenden Kontaktelements und der zweifachen Dicke eines Silberplättchens ist.

9. Quellenumschalter nach einem der Ansprüche 1 bis 8, bei dem die feststehenden Kontakte (51, 52, 53) schräge Kontaktflächen an ihren Vorderkanten beinhalten, der zwischen den Kontakten (51) und (53) liegende feststehende Kontakt (52) zwei obere schräge Kontaktflächen (525, 521) und zwei untere schräge Kontaktflächen (527, 523) beinhaltet, der feststehende Kontakt (53) eine obere schräge Kontaktfläche (531) und eine untere schräge Kontaktfläche (533) beinhaltet, während der feststehende Kontakt (51) eine obere schräge Kontaktfläche (515) und eine untere schräge Kontaktfläche (517) beinhaltet.

10. Quellenumschalter nach einem der Ansprüche 1 bis 9, bei dem der untere (614) und obere (612) ebene Leiter des beweglichen Kontaktelements (61) immer in Kontakt mit dem feststehenden Kontaktelement (52) sind, das zwischen den beiden anderen feststehenden Kontaktelementen liegt, wobei das feststehende Kontaktelement (52) als Führungsmittel für das bewegliche Kontaktelement (61) dient, während es sich aus einer Stellung in die andere bewegt.

11. Quellenumschalter nach einem der Ansprüche 1 bis 10, bei dem der Abstand zwischen zwei benachbarten feststehenden Kontaktelementen 5 cm beträgt.

12. Quellenumschalter nach einem der Ansprüche 1 bis 11, umfassend ein Steuermodul (80), welches das Drehantreiben einer drehenden Achse (60) ermöglicht, mit welcher der isolierende zentrale Teil (611) jedes beweglichen Kontaktelements (61) verbunden ist, wobei das Antreiben der drehenden Achse entweder automatisch mithilfe motorisierter Mittel (82) oder manuell erfolgt.

13. Quellenumschalter nach Anspruch 12, bei dem das Steuermodul Mittel zum Messen der Spannungen in den beiden Polen umfasst, die an die leitenden Adern der Kabel (20) und (40) geschaltet sind, die mit den Quellen elektrischer Energie (2) und (4) verbunden sind, wobei jedes der Messmittel jeweils an den mit den feststehenden Kontaktelementen (51) und (53) verbundenen Polen an einen Spannungsteiler (71 und 73) gekoppelt ist.

14. Quellenumschalter nach Anspruch 12 oder 13, bei dem das Steuermodul Sicherheitsmittel umfasst, um das Drehantreiben der drehenden Achse (60) zu verhindern, wenn eine Spannung an den Klemmen der Spannungsteiler (71) und (73) gemessen wird.

15. Quellenumschalter nach einem der Ansprüche 1 bis 14, umfassend eine Schnittstelle (85) zu einem Leuchtanzeiger, dessen Funktion es ist anzuzeigen, ob die Last (6) an die Hauptquelle elektrischer Energie (2) oder an die Ersatzquelle elektrischer Energie (4) angeschlossen ist.

16. Quellenumschalter nach Anspruch 15, bei dem die Schnittstelle (85) einen mit der drehenden Achse (60) mechanisch verbundenen Anzeiger umfasst, dessen Funktion es ist anzuzeigen, ob die Last (6) an die Hauptquelle elektrischer Energie (2) oder an die Ersatzquelle elektrischer Energie (4) angeschlossen ist.

17. Quellenumschalter nach einem der Ansprüche 1 bis 16, der im Inneren eines isolierenden Gehäuses (11) angeordnet ist, das ein maximales Baumaß von 130 cm Höhe bei 60 cm Breite und 80 cm Dicke aufweist.

## Claims

1. A source inverter (10) for a current of between 1000 A and 40000 A comprising one or more phases, intended to connect an electrical load (6) to a backup electrical power source (4) in the event of failure of the main electrical power source (2), said source inverter comprising three poles per phase, each connected to at least one fixed contact element (51, 52, 53), each pole being respectively connected to the main electrical power source (2), to the electrical load to be supplied (6) and to the backup electrical power source (4), said inverter comprising at least one movable contact element (61) per phase in order to connect together two poles of a same phase by contact with two of the three fixed contact elements, said movable contact element (61) being adapted to move between two positions,
**characterized in that** the two positions comprise a first position in which said movable contact element (61) connects said fixed contact element (52) connected to the electrical load (6) to said fixed contact element (51) connected to said main electrical power source (2), and a second position in which said movable contact element (61) connects said fixed contact element (52) connected to the electrical load (6) to said fixed contact element (53) connected to said backup electrical power source (4), said movable element (61) comprising two parallel and identical flat conductors, an upper flat conductor (612) and a lower flat conductor (614), current flowing in the same direction in both conductors when the source inverter is energized, there is an electrodynamic force of attraction of the two flat conductors towards each other proportional to the square of the intensity of the current capable of maintaining contact between the fixed and movable contact elements in the event of an overcurrent due to a short circuit, said movable contact element (61) comprises a spring-type means (616, 617) which exerts an elastic force, so that, when they are in contact with one or two fixed contact elements (51, 52, 53), this elastic force induces a clamping force of the flat conductors on the fixed contact elements, which gradually increases as the contact elements (61) move from their closed position to their intermediate position, and conversely gradually decreases as the movable contact elements move from their intermediate position to their closed position.

2. The source inverter according to Claim 1, wherein said fixed contact elements (51, 52, 53) are aligned and each comprise two contact pads of conductive material, a first contact pad (512, 522, 532) and a second contact pad (514, 524, 534), such that the first contact pads are located in a first and same plane and the second contact pads are located in a second and same plane parallel to said first plane.

3. The source inverter according to Claim 2, wherein the electrical connection between said movable contact element and a fixed contact element (51, 52, 53) is through two pairs of contacting surfaces, a first pair comprising the first contact pad (512, 522, 532) of the fixed contact element (51, 52, 53) and the contact surface of the upper flat conductor (612) and a second pair comprising the second contact pad (512, 522, 532) of the fixed contact element (51, 52, 53) and the contact surface of the lower flat conductor (614).

4. The source inverter according to Claim 2 or 3, wherein, in each of its positions, the movable contact element is connected to two fixed contact elements in order to connect two poles together.

5. The source inverter according to any of Claims 2 to 4, wherein each movable contact element (61) comprises a central insulating part (611) on which the two upper (612) and lower (614) flat conductors are fixed so as to be parallel and face to face.

6. The source inverter according to any of Claims 1 to 5, wherein the clamping force allows the flat conductors to rub against the fixed contact elements, which allows self-cleaning of the contact pads when the movable contact element moves from one position to another.

7. The source inverter according to any of Claims 1 to 6, wherein each part of the surfaces of the flat conductors (612, 614) intended to ensure electrical contact includes at least one silver pad (622, 652, 624, 654) and preferably includes a second silver pad (632, 642, 634, 644).

8. The source inverter according to Claim 7, wherein the clamping force due to the springs is minimum when the movable contact element (61) is in an intermediate position located between the first and the second position and wherein the clamping force due to the springs is maximum when the movable contact element (61) is in its first or second position, the silver pads not being in contact, in the intermediate position, with the fixed contact element (52), the distance between the flat conductors (612, 614) is minimum and equal to the thickness of a fixed contact element and, in the first or second position, the silver pads being in contact with the fixed contact elements (51, 52) or (53, 52), the distance between the flat conductors (612, 614) is equal to the sum of the thickness of a fixed contact element and twice the thickness of a silver pad.

9. The source inverter according to any of Claims 1 to 8, wherein the fixed contacts (51, 52, 53) have oblique contact surfaces on their leading edges, the fixed contact (52) located between the contacts (51) and (53) includes two upper oblique contact surfaces (525, 521) and two lower oblique contact surfaces (527, 523), the fixed contact (53) includes an upper oblique contact surface (531) and a lower oblique contact surface (533) while the fixed contact (51) includes an upper oblique contact surface (515) and a lower oblique contact surface (517).

10. The source inverter according to any of Claims 1 to 9, wherein said lower (614) and upper (612) flat conductors of the movable contact element (61) are always in contact with the fixed contact element (52) located between the two other fixed contact elements, the fixed contact element (52) serving as a guiding means of the movable contact element (61) as it moves from one position to the other.

11. The source inverter according to any of Claims 1 to 10, wherein the distance between two adjacent fixed contact elements is equal to 5 cm.

12. The source inverter according to any of Claims 1 to 11, comprising a control module (80) which allows the rotation of a rotary shaft (60) to which is connected the central insulating part (611) of each movable contact element (61), said rotary shaft being rotated either automatically by means of motorized means (82), or manually.

13. The source inverter according to Claim 12, wherein the control module comprises means for measuring the voltages in the two poles connected to the conductor wires of the cables (20) and (40) connected to the electrical power sources (2) and (4), each measuring means being coupled to a voltage divider (71 and 73) respectively on the poles connected to the fixed contact elements (51) and (53).

14. The source inverter according to Claim 12 or 13, wherein said control module comprises safety means for preventing said rotary shaft (60) from being driven in rotation if a voltage is measured at the terminals of the voltage dividers (71) and (73).

15. The source inverter according to any of Claims 1 to 14, comprising an interface (85) with a light indicator whose function is to indicate whether the load (6) is connected to the main electrical power source (2) or to the backup electrical power source (4).

16. The source inverter according to Claim 15, wherein the interface (85) comprises an indicator mechanically connected to the rotary shaft (60) whose function is to indicate whether the load (6) is connected to the main electrical power source (2) or to the backup electrical power source (4).

17. The source inverter according to any of Claims 1 to 16, placed inside an insulating frame (11) having a maximum size of 130 cm in height by 60 cm in width and 80 cm in thickness.
